# EUROPÄISCHE PATENTSCHRIFT

(11) **EP 2 885 339 B1**
(45) Veröffentlichungstag und Bekanntmachung des Hinweises auf die Patenterteilung: **04.05.2016**
(21) Anmeldenummer: 13747665.1
(22) Anmeldetag: 08.08.2013
(51) Int. Cl.: C08G 77/04, C09D 201/10, C09J 201/10, C08L 1/10, C09D 183/04, C09J 183/04, C08L 83/04

(54) **MEHRKOMPONENTIGE VERNETZBARE MASSEN AUF BASIS VON ORGANYLOXY-SILANTERMINIERTEN POLYMEREN**
MULTICOMPONENT CROSSLINKABLE COMPOSITIONS BASED ON ORGANYLOXYSILANE-TERMINATED POLYMERS
MATIÈRES RÉTICULABLES COMPORTANT PLUSIEURS CONSTITUANTS, À BASE DE POLYMÈRES À TERMINAISON ORGANYLOXY-SILANE

(30) Priorität: 14.08.2012 DE 102012214427
(43) Veröffentlichungstag der Anmeldung: 24.06.2015
(73) Patentinhaber: Wacker Chemie AG, 81737 München (DE)
(72) Erfinder: STANJEK, Volker, 84539 Ampfing (DE); BACHMEIER, Bernd-Josef, 84533 Haiming (DE); ZANDER, Lars, 84503 Altötting (DE)
(74) Vertreter: Budczinski, Angelika
(86) Internationale Anmeldenummer: PCT/EP2013/066627
(87) Internationale Veröffentlichungsnummer: WO 2014/026906

(56) Entgegenhaltungen:
- DE-A1-102009 027 357
- US-A1- 2005 227 093

## Beschreibung

Die Erfindung betrifft mehrkomponentige vernetzbare Massen auf Basis von silanvernetzenden Prepolymeren und Siliconharzen, Verfahren zu deren Herstellung und deren Verwendung als Kleb- und Dichtstoffe, insbesondere als Klebstoffe mit hoher Zugscherfestigkeit.

Für Verklebungen mit hoher Zugscherfestigkeit, wie sie u.a. bei vielen Holzverklebungen zum Einsatz kommen, werden typischerweise isocyanatvernetzende PU-Klebstoffe eingesetzt. Diese enthalten meist aromatische Polyisocyanate. Derartige Systeme härten durch eine Reaktion der Isocyanatgruppen mit (Luft-) Feuchtigkeit aus. Da PU-Klebstoffe über eine chemische Vernetzungsreaktion härten und sich auch chemisch an Holz als Substrat anbinden können, zeigen sie sehr gute mechanische Eigenschaften und sind auch vergleichsweise beständig gegenüber äußeren (Witterungs-)Einflüssen wie Feuchtigkeit oder direkten Wasserkontakt.

Die generelle Leistungsfähigkeit von Klebstoffen wird durch die Erfüllung von Normen, wie beispielsweise die DIN EN 204, Beanspruchungsgruppe D1-D4 festgestellt. Diese Normen können in der Regel von isocyanatvernetzenden Klebstoffen erfüllt werden. Dennoch besitzen auch isocyanatvernetzende Klebstoffe systemimmanente Nachteile, wie z.B. eine gesundheitliche Einstufung, die von sensibilisierend bis giftig reicht. Kritisch ist hier die Menge an verbleibenden monomeren Isocyanaten, die nur schwer zu entfernen sind. Dies ist insofern problematisch für den Endanwender, d.h. den Handwerker oder Do-it-yourself-Anwender, da er nicht nur mit dem ausgehärteten und damit isocyanatfreien und völlig unbedenklichen Produkt, sondern auch mit dem isocyanathaltigen Klebstoff bzw. monomeren Isocyanaten in Kontakt kommt. Beim ungeübten Do-it-yourself-Anwender besteht dabei die besondere Gefahr, dass die Produkte gegebenenfalls nicht fachkundig und/oder sachgerecht angewendet werden. Zusätzliche Gefahren gehen hier auch von einer nicht sachgerechten Lagerung, z.B. in Reichweite von Kindern, aus. Beim professionellen Handwerker hingegen ist zwar von einer sachgerechten Anwendung und Lagerung auszugehen. Hier besteht jedoch gegebenenfalls das Problem, dass der professionelle Anwender äußerst regelmäßig - unter Umständen sogar mehrmals täglich - mit dem isocyanathaltigen Material umgehen muss, was insbesondere ob der o.g. sensibilisierenden sowie gegebenenfalls krebserregenden Wirkung von Isocyanaten potentiell kritisch ist.

Etwas günstiger sind hier isocyanatvernetzende Klebstoffe, die nur sehr geringe Gehalte an flüchtigen monomeren Isocyanaten aufweisen und somit zumindest kennzeichnungsfrei sind. Jedoch enthalten auch diese nach wie vor meist hohe Konzentrationen an verschiedenen oligomeren Isocyanaten.

Eine alternative Härtungstechnologie, die zunehmend Anwendung im Klebstoffbereich findet, ist die Silanvernetzung, bei der alkoxysilanfunktionelle Prepolymere bei Kontakt mit Luftfeuchtigkeit zunächst hydrolysieren und anschließend durch eine Kondensationsreaktion aushärten. Die entsprechenden silanfunktionellen - meist silanterminierten - Prepolymere sind toxikologisch völlig unbedenklich.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. So zeigen Klebstoffe auf Basis von alkoxysilanvernetzenden Polymeren im ausgehärteten Zustand nicht nur gute Haftungseigenschaften auf den meisten Substraten, sondern auch sehr gute mechanische Eigenschaften, da sie sowohl eine hohe Elastizität als auch eine für viele Anwendungen vollkommen ausreichende Reißfestigkeit aufweisen.

Nachteilig an vielen Systemen entsprechend des Standes der Technik ist jedoch eine geringe Reaktivität der entsprechenden MS- bzw. SPUR-Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Prepolymeren von Vorteil, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen.

Nachteilig an den meisten gängigen silanvernetzenden Systemen ist jedoch eine relativ geringe Zugscherfestigkeit. Daher beschränken sich typische Anwendungen für diesen neuen Klebstofftyp in der Regel auf Bereiche, in denen eher elastische als hochreißfeste Klebstoffe benötigt werden.

Klebstoffe mit Zugscherfestigkeiten >6 MPa, insbesondere Klebstoffe mit Zugscherfestigkeiten >9 MPa, sind bislang nur mit einigen sehr speziellen silanvernetzenden Systemen herstellbar, u.a. mit silanterminierten Polyurethanen, wie sie z.B. in WO 2011/026658 beschrieben sind. Hier wird die hohe Zugscherfestigkeit durch den Einsatz von Prepolymeren erreicht, die zum einen eine sehr hohe Dichte an zur Wasserstoffbrückenbildung befähigten Urethan- und/oder Harnstoffeinheiten aufweisen und zum anderen relativ kurzkettig sind und somit eine entsprechend hohe Zahl an vernetzbaren Silanendgruppen aufweisen. Derartige Systeme besitzen jedoch zwangsläufig zwei systemimmanente Nachteile. Denn zum einen erfordert die Herstellung von Prepolymeren mit einer hohen Konzentration an silanvernetzenden Gruppen entsprechend große Silanmengen. Diese stellen jedoch in der Regel die kostenintensivsten Prepolymerbestandteile dar. Zum anderen führt die zur Erreichung hoher Zugscherfestigkeiten ebenfalls notwendige hohe Konzentration an Urethan- und/oder Harnstoffgruppen zu sehr hohen Prepolymerviskositäten. Entsprechend problematisch sind sowohl die Compoundierung dieser Prepolymere zu fertig formulierten Klebstoffen als auch die Anwendung dieser meist ebenfalls vergleichsweise hochviskosen Endprodukte.

DE 102009027357 beschreibt hochelastische, weiche Klebstoffe, deren Reißfestigkeiten im Bereich 1,2 bis 2,5 MPa liegen.

Gegenstand der Erfindung sind mehrkomponentig vernetzbare Massen (K) enthaltend mindestens eine Komponente (K1) und eine Komponente (K2), dadurch gekennzeichnet, dass Komponente (K1) 100 Gewichtsteile Verbindungen (A) der Formel

Y- [(CR¹₂)_{b}-SiRₐ(OR²)₃₋ₐ]ₓ (I)

enthält, wobei
- Y: einen x-wertigen, über Stickstoff, Sauerstoff, Schwefel oder Kohlenstoff gebundenen Polymerrest bedeutet,
- R: gleich oder verschieden sein kann und einen einwertigen, gegebenenfalls substituierten, SiC-gebundenen Kohlenwasserstoffrest darstellt,
- R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
- R²: gleich oder verschieden sein kann und Wasserstoffatom oder einen einwertigen, gegebenenfalls substituierten Kohlenwasserstoffrest darstellt,
- x: eine ganze Zahl von 1 bis 10, bevorzugt 1, 2 oder 3, besonders bevorzugt 1 oder 2, ist,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3, insbesondere 1, ist, enthält, und

Komponente (K2), jeweils bezogen auf 100 Gewichtsteile Verbindungen (A) in Komponente (K1), mindestens 0,05 Gewichtsteile Wasser sowie mindestens 1 Gewichtsteil mindestens eines weiteren Stoffes, ausgewählt aus
(B) Siliconharzen enthaltend Einheiten der Formel

   R³_{c}(R⁴O)_{d}SiO_{(4-c-d)/2} (II),

   wobei
   - R³: gleich oder verschieden sein kann und Wasserstoffatom oder einen einwertigen, SiC-gebundenen, gegebenenfalls substituierten Kohlenwasserstoffrest,
   - R⁴: gleich oder verschieden sein kann und Wasserstoffatom oder einen einwertigen, gegebenenfalls substituierten Kohlenwasserstoffrest bedeutet,
   - c: 0, 1, 2 oder 3 ist und
   - d: 0, 1, 2 oder 3, bevorzugt 0, 1 oder 2, besonders bevorzugt 0 oder 1, ist,
   wobei die Summe aus c+d kleiner oder gleich 3 ist und in mindestens 50 %, bevorzugt mindestens 60 %, der Einheiten der Formel (II) c gleich 0 oder 1 ist,
(C) Weichmachern,
(D) Füllstoffen,
(E) Verdickungsmitteln und
(F) Lösungsmitteln, enthält,
mit der Maßgabe, dass in den Komponenten (K1) und (K2) insgesamt mindestens 10 Gewichtsteile Siliconharze (B) enthalten sind, bezogen auf 100 Gewichtsteile Verbindungen (A) in Komponente (K1).

Vorzugsweise handelt es sich bei den erfindungsgemäßen Massen (K) um zweikomponentige Massen, die aus den Komponenten (K1) und (K2) bestehen.

Die Komponenten (K1) und (K2) der erfindungsgemäßen Massen (K) werden bevorzugt während der Lagerung getrennt aufbewahrt und kurz vor oder auch erst während der Applikation der erfindungsgemäßen Masse (K) miteinander vermischt.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Bei Polymerrest Y handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen, Polyethylen oder Polypropylen und Copolymere von Polyisobutylen mit Isopren; Polyisoprene; Polyurethane; Polyester; Polyamide; Polyacrylate; Polymetacrylate; und Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O- und -NR'- an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Beispiele für Reste R' sind Cyclohexyl-, Cyclopentyl-, n- und iso-Propyl-, n-, iso- und t-Butylreste, die diversen Stereoisomere des Pentylrests, Hexylrests oder Heptylrests sowie der Phenylrest.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Bei den Resten R" handelt es sich vorzugsweise um Alkylgruppen mit 1 bis 10 Kohlenstoffatomen, besonders bevorzugt um Methyl-, Ethyl- oder Propylreste.

Besonders bevorzugt handelt es sich bei Rest Y in Formel (I) um Polyurethanreste und Polyoxyalkylenreste, insbesondere um polyoxypropylenhaltige Polyurethanreste oder Polyoxypropylenreste.

Die Verbindung (A) kann dabei die auf die beschriebene Weise angebundenen Gruppen -[(CR¹₂)_{b}-SiRₐ(OR²)₃₋ₐ] an beliebigen Stellen im Polymer aufweisen, wie etwa kettenständig und/oder endständig, bevorzugt kettenständig und endständig, besonders bevorzugt endständig.

Sofern Y für Polyurethanreste steht, handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Reste Y weisen dabei vorzugsweise zahlenmittlere Molmassen Mₙ von 10 000 bis 30 000 g/mol, besonders bevorzugt von 11 000 bis 20 000 g/mol, auf. Geeignete Verfahren zur Herstellung von entsprechenden Verbindungen (A) sowie auch Beispiele für die Verbindungen (A) selbst sind unter anderen in EP 1 093 482 B1 (Absätze [0014]-[0023], [0039]-[0055] sowie Beispiel 1 und Vergleichsbeispiel 1) und EP 1 641 854 B1 (Absätze [0014]-[0035], Beispiele 4 und 6 sowie die Vergleichsbeispiele 1 und 2) beschrieben, die zum Offenbarungsgehalt der vorliegenden Anmeldung zu zählen sind.

Sofern Y für Polyoxyalkylenreste steht, handelt es sich bevorzugt um lineare oder verzweigte Polyoxyalkylenreste, besonders bevorzugt um Polyoxypropylenreste, deren Kettenenden vorzugsweise über -O-C(=O)-NH- an die Gruppe bzw. Gruppen -[(CR'₂)_{b}-SiRₐ(OR²)₃₋ₐ] gebunden sind. Die Polyoxyalkylenreste Y weisen vorzugsweise zahlenmittlere Molmassen Mₙ von 10 000 bis 30 000 g/mol, besonders bevorzugt von 11 000 bis 20 000 g/mol, auf. Geeignete Verfahren zur Herstellung der entsprechenden Verbindungen (A) sowie auch Beispiele für die Verbindungen (A) selbst sind in unter anderem in EP 1 535 940 B1 (Absätze [0005]-[0025] sowie Beispiele 1-3 und Vergleichsbeispiel 1-4) und EP 1 896 523 B1 (Absätze [0008]-[0047]) beschrieben, die zum Offenbarungsgehalt der vorliegenden Anmeldung zu zählen sind.

Die zahlenmittlere Molmasse Mₙ ist dabei mittels Size Exclusion Chromatography (SEC) gegen Polystyrol-Standard, in THF, bei 60 °C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmbar.

Bei den Endgruppen der erfindungsgemäß eingesetzten Verbindungen (A) handelt es sich vorzugsweise um solche der allgemeinen Formeln

-NH-C(=O) -NR'- (CR¹₂)_{b}-SiRₐ (OR²)₃₋ₐ (III)

und

-O-C(=O)-NH-(CR¹₂)_{b}-SiRₐ(OR²)₃₋ₐ (IV),

wobei die Reste und Indizes eine der oben dafür angegebenen Bedeutungen haben.

Bei den Endgruppen der erfindungsgemäß eingesetzten Verbindungen (A) handelt es sich besonders bevorzugt um solche der Formel (IV).

Bevorzugt handelt es sich bei den Verbindungen (A) um silanterminierte Polyoxyalkylene, besonders bevorzugt um silanterminierte Polyoxypropylene, mit Endgruppen der Formel (IV), wobei R¹ für Wasserstoffatom, R für Methylrest, R² für Methyl- oder Ethylrest, b für 1 oder 3 und a für 0 oder 1 steht. Die silanterminierten Polyoxyalkylene weisen dabei außer den Endgruppen (IV) vorzugsweise ausschließlich Polyethereinheiten auf. Vorzugsweise besitzen die erfindungsgemäßen Polymere (A) pro Molekül 2 oder 3, besonders bevorzugt 2, Endgruppen der Formel (IV).

Ein großer Vorteil von silanterminierten Polyoxyalkylenen mit Endgruppen der Formel (IV) gegenüber von silanterminierten Polyoxyalkylenen mit anderen Endgruppen stellt ihre einfache Herstellbarkeit durch eine Umsetzung von gängigen, mit Hydroxylgruppen terminierten Polyoxyalkylenen und Silanen der Formel

OCN-(CR¹₂)_{b}-SiRₐ (OR²)₃₋ₐ (V)

dar, wobei alle Reste und Indizes eine der oben genannten Bedeutungen haben. Entscheidend ist dabei, dass durch diese Reaktion eine weitgehend vollständige Terminierung der vorhandenen Kettenenden gelingt, womit sich die aus diesem Verfahren resultierenden Produkte signifikant von den Produkten anderer Verfahren, wie z.B. einer Hydrosilylierung von α,ω-ungesättigten Polymeren mit SiH-funktionellen Silanen, unterscheidet.

Diese weitgehend vollständige Terminierung führt überraschenderweise zu deutlich besseren Eigenschaften, insbesondere zu deutlich besseren Reißfestigkeiten der die Polymere (A) enthaltenden ausgehärteten Massen (K) im Vergleich zu Polymeren, deren Endgruppen auf anderem Wege, z.B. über Hydrosilylierung, hergestellt worden sind.

Bei den silanterminierten Polymeren (A) handelt es sich bevorzugt um solche, deren Kettenenden mindestens zu 85 %, besonders bevorzugt mindestens zu 90 %, insbesondere mindestens zu 95 %, mit Endgruppen der Formel (IV) terminiert sind. Insbesondere werden als Verbindungen (A) lineare Polyoxypropylene bevorzugt, deren Ketten mindestens zu 85 %, besonders bevorzugt mindestens zu 90 %, insbesondere mindestens zu 95 %, mit Endgruppen der Formel (IV) terminiert sind.

Die zahlenmittleren Molekulargewichte Mₙ der Verbindungen (A) betragen vorzugsweise mindestens 10 000 g/mol, besonders bevorzugt mindestens 11 000 g/mol, und vorzugsweise höchstens 30 000 g/mol, besonders bevorzugt höchstens 24 000 g/mol, insbesondere höchstens 22 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20 °C.

Die erfindungsgemäß eingesetzten Verbindungen (A) können nur eine Art von Verbindung der Formel (I) enthalten wie auch Gemische unterschiedlicher Arten von Verbindungen der Formel (I).

Dabei können die Verbindungen (A) ausschließlich Verbindungen der Formel (I) enthalten, in denen mehr als 90 %, bevorzugt mehr als 95 %, besonders bevorzugt mehr als 98 %, aller an den Rest Y gebundenen Silylgruppen identisch sind. Es können dann aber auch Verbindungen (A) eingesetzt werden, die zumindest zum Teil aus Verbindungen der Formel (I) bestehen, bei denen an einen Rest Y unterschiedliche Silylgruppen gebunden sind. Schließlich können als Verbindungen (A) auch Gemische verschiedener Verbindungen der Formel (I) eingesetzt werden, in denen insgesamt mindestens zwei unterschiedliche Arten von an Reste Y gebundene Silylgruppen vorhanden sind, wobei jedoch sämtliche an jeweils einen Rest Y gebundenen Silylgruppen identisch sind.

Falls es sich bei den Verbindungen (A) um verschiedene Arten von Verbindungen der Formel (I) handelt, sind Mischungen, die sowohl Verbindungen (A1) mit Endgruppen der Formel (III) oder (IV), bei denen b = 1 und R¹ = H bedeutet und a = 0 oder 1 ist, enthalten, als auch Verbindungen (A2) mit Endgruppen der Formel (III) oder (IV), bei denen b = 3 und R¹ = H bedeutet und a = 0 ist, bevorzugt und solche besonders bevorzugt, in denen das Gewichtsverhältnis von (A1) zu (A2) 0,1 bis 10, vorzugsweise 0,2 bis 5, beträgt.

In einer bevorzugten Ausführungsform der Erfindung wird eine Mischung aus verschiedenen Verbindungen (A) eingesetzt, die mindestens eine Verbindung (A1) mit Endgruppen der Formel (IV), bei denen b = 1, R¹ = H, a = 1 und R² = CH₃ ist, und mindestens eine Verbindung (A2) mit Endgruppen der Formel (IV), bei denen b = 3, R¹ = H, a = 0 und R² = CH₃ ist, enthält, mit einem Gewichtsverhältnis von (A1) zu (A2) von bevorzugt 0,1 bis 10, besonders bevorzugt von 0,2 bis 5.

Die erfindungsgemäß eingesetzten Verbindungen (A) sind handelsübliche Produkte oder können nach in der Chemie gängigen Verfahren hergestellt werden.

Bezogen auf 100 Gewichtsteile der Verbindungen (A) in der Komponente (K1) enthalten die erfindungsgemäßen Massen (K) insgesamt vorzugsweise 30 bis 1000 Gewichtsteile, besonders bevorzugt 60 bis 500 Gewichtsteile, insbesondere 80 bis 300 Gewichtsteile, Siliconharze (B). Die Gesamtmenge an Siliconharze (B) kann sich dabei sowohl vollständig in der Komponente (K1), vollständig in der Komponente (K2) oder auch jeweils in Teilen in beiden Komponenten (K1) und (K2) befinden.

Vorzugsweise sind die Siliconharze (B) entweder ausschließlich in der Komponente (K2) oder aber in beiden Komponenten (K1) und (K2) vorhanden. Die Komponente (K2) enthält dann vorzugsweise mindestens 10 %, besonders bevorzugt mindestens 30 %, insbesondere mindestens 50 %, der gesamten in der erfindungsgemäßen Masse (K) vorhandenen Menge an Siliconharze (B).

Die Siliconharze (B) bestehen vorzugsweise zu mindestens 90 Gew.-% aus Einheiten der Formel (II). Besonders bevorzugt bestehen Siliconharze (B) ausschließlich aus Einheiten der Formel (II).

Beispiele für Reste R³ sind die oben für R angegebenen Beispiele.

Bevorzugt handelt es sich bei Rest R³ um gegebenenfalls mit Halogenatomen substituierte, einwertige SiC-gebundene aliphatische oder aromatische Kohlenwasserstoffreste mit 1 bis 18 Kohlenstoffatomen, besonders bevorzugt um den Methyl- oder Phenylrest. Insbesondere handelt es sich bei allen Resten R³ ausschließlich um Methyl- und Phenylreste.

Beispiele für Rest R⁴ sind Wasserstoffatom oder die für Rest R angegebenen Beispiele. Bevorzugt handelt es sich bei Rest R⁴ um Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, insbesondere um den Methyl-, Ethyl oder Butylrest, ganz besonders bevorzugt um den Methylrest.

Bevorzugt werden als Verbindung (B) Phenylsiliconharze eingesetzt. Besonders bevorzugt bestehen die Phenylsiliconharze (B) ausschließlich aus Einheiten der Formel (II), bei denen mindestens 10 %, bevorzugt mindestens 50 %, besonders bevorzugt mindestens 60 %, aller Einheiten der Formel (II) mindestens eine SiC-gebundene Phenylgruppe aufweisen.

Vorzugsweise werden Siliconharze (B) eingesetzt, in denen c+d kleiner als 3 ist.

In einer Ausführung der Erfindung werden Phenylsiliconharze (B) eingesetzt, die, jeweils bezogen auf die Gesamtzahl an Einheiten der Formel (II), mindestens 50 %, besonders bevorzugt mindestens 60 %, Einheiten der Formel (II) aufweisen, in denen c für den Wert 1 steht.

In einer bevorzugten Ausführungsform der Erfindung werden Siliconharze (B) eingesetzt, die ausschließlich Einheiten der Formel (II) aufweisen, in denen c für den Wert 0, 1 oder 2 steht, mit der Maßgabe, dass in mindestens 50 % der Einheiten der Formel (II) c gleich 0 oder 1 ist.

In einer bevorzugten Ausführungsform der Erfindung werden Siliconharze (B) eingesetzt, die ausschließlich Einheiten der Formel (II) aufweisen, in denen c für den Wert 1 oder 2 steht.

In einer speziellen Ausführungsform der Erfindung werden Siliconharze (B) eingesetzt, die ausschließlich Einheiten der Formel (II) aufweisen, in denen c für den Wert 1 steht.

Vorzugsweise werden Siliconharze (B) eingesetzt, die, jeweils bezogen auf die Gesamtzahl an Einheiten der Formel (II), mindestens 70 %, besonders bevorzugt mindestens 80 %, Einheiten der Formel (II) aufweisen, in denen d für den Wert 0 oder 1 steht.

Vorzugsweise werden Siliconharze (B) eingesetzt, die, jeweils bezogen auf die Gesamtzahl an Einheiten der Formel (II), 30 % bis 95 %, besonders bevorzugt 30 % bis 90 %, Einheiten der Formel (II) aufweisen, in denen d für den Wert 0 steht.

Beispiele für Siliconharze (B) sind Organopolysiloxanharze, die im Wesentlichen, vorzugsweise ausschließlich, aus (Q)-Einheiten der Formeln SiO_{4/2}, Si (OR⁴)O_{3/2}, Si (OR⁴)₂O_{2/2} und Si (OR⁴) ₃O_{1/2}, (T)-Einheiten der Formeln PhSiO_{3/2}, PhSi (OR⁴) O_{2/2} und PhSi (OR⁴)₂O_{1/2}, (D) -Einheiten der Formeln Me₂SiO_{2/2} und Me₂Si (OR⁴)O_{1/2} sowie (M)-Einheiten der Formel Me₃SiO_{1/2} bestehen, wobei Me für einen Methylrest, Ph für einen Phenylrest und R⁴ Methyl-, Ethyl- oder Butylrest, bevorzugt Methylrest, bedeutet, wobei das Harz pro Mol (T)-Einheiten bevorzugt 0-2 Mol (Q)-Einheiten, 0-2 Mol (D)-Einheiten und 0-2 Mol (M)-Einheiten enthält.

Bevorzugte Beispiele für Siliconharze (B) sind Organopolysiloxanharze, die im Wesentlichen, vorzugsweise ausschließlich, aus T-Einheiten der Formeln PhSiO_{3/2}, PhSi(OR⁴)O_{2/2} und PhSi(OR⁴)₂O_{1/2} und T-Einheiten der Formeln MeSiO_{3/2}, MeSi (OR⁴) O_{2/2} und Me-Si(OR⁴)₂O_{1/2} sowie gegebenenfalls D-Einheiten der Formeln Me₂SiO_{2/2} und Me₂Si (OR⁴) O_{1/2} bestehen, wobei Me für einen Methylrest, Ph für einen Phenylrest und R⁴ Methyl-, Ethyl- oder Butylrest, bevorzugt Methylrest, bedeutet. Das molare Verhältnis von Phenylsilicon- zu Methylsilicon-Einheiten liegt dabei zwischen 0,5 und 2,0. Der Gehalt an D-Einheiten in diesen Siliconharzen liegt vorzugsweise unter 10 Gew.-%.

Weitere bevorzugte Beispiele für Siliconharze (B) sind Organopolysiloxanharze, die im Wesentlichen, vorzugsweise ausschließlich, aus T-Einheiten der Formeln PhSiO_{3/2}, PhSi(OR⁴)O_{2/2} und PhSi (OR⁴)₂O_{1/2} bestehen mit Ph gleich Phenylrest und R⁴ Methyl-, Ethyl- oder Butylrest, bevorzugt Methylrest, bedeutet.

Vorzugsweise besitzen die Siliconharze (B) eine zahlenmittlere Molmasse Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 100 000 g/mol, insbesondere bei höchstens 50 000 g/mol. Sie können bei 23 °C und 1000 hPa sowohl fest als auch flüssig sein, wobei flüssige Siliconharze bevorzugt werden.

Die erfindungsgemäß eingesetzten Verbindungen (B) können nach in der Chemie gängigen Verfahren hergestellt werden bzw. sind handelsübliche Produkte, wie z.B. die Produkte SILRES^{®} IC 368, SILRES^{®} IC 678 oder SILRES^{®} SY231, käuflich erhältlich bei der Wacker Chemie AG, D-München.

Die Siliconharze (B) können sowohl in reiner Form als auch in Form einer Lösung in einem geeigneten Lösungsmittel eingesetzt werden.

Als Lösungsmittel können dabei Substanzen wie Ether (z.B. Diethylether, Methyl-t-butylether, Etherderivate des Glycols, THF), Ester (z.B. Ethylacetat, Butylacetat, Glycolester), Kohlenwasserstoffe (z.B. Pentan, Cyclopentan, Hexan, Cyclohexan, Heptan, Octan oder auch längerkettige verzweigte und unverzweigte Alkane), Ketone (z.B. Aceton, Methylethylketon), Aromaten (z.B. Toluol, Xylol, Ethylbenzol, Chlorbenzol) oder auch Alkohole (z.B. Methanol, Ethanol, Glycol, Propanol, iso-Propanol, Glycerin, Butanol, iso-Butanol, t-Butanol) dienen.

Vorzugsweise werden jedoch Siliconharze (B) eingesetzt, die frei von organischen Lösungsmitteln sind.

Das erfindungsgemäß eingesetzte Wasser kann direkt als solches in Form von wässrigen Zubereitungen oder als in Feststoffen enthaltenes oder von ihnen absorbiertes Wasser vorliegen.

Beispiele für wässrige Zubereitungen sind wässrige Emulsionen, wie z.B. Emulsionen von Wasser in Weichmacher (C), Lösungsmittel (F) und/oder Siliconharzen (B). Gegebenenfalls kann dabei auch ein Verdickungsmittel (E) und/oder Füllstoffe (D) zugegen sein.

Beispiele für in Feststoffen enthaltenes Wasser sind an Füllstoffen gebundene Feuchtigkeit, wie z.B. hochdisperse Füllstoffe, wie hydrophile Kieselsäuren oder gemahlene Calciumcarbonate, die bis zu über 1 Gew.-% an der Oberfläche gebundenes Wasser enthalten können.

Weitere Beispiele für in Feststoffen enthaltenes Wasser sind Füllstoffe, wie gefällte Calciumcarbonate, die im Inneren der Füllstoffteilchen physikalisch gebundenes Wasser enthalten, oder mit wachsartigen oder harzartigen Polymeren umschlossene Wasserpartikel.

Bevorzugt wird zur Herstellung der Komponente (K2) Wasser direkt eingesetzt.

Zusätzlich zu den eingesetzten Verbindungen (A), (B) und Wasser können die erfindungsgemäßen Massen (K) alle weiteren Stoffe enthalten, die auch bisher in vernetzbaren Massen eingesetzt wurden und die unterschiedlich sind zu Verbindungen (A) und (B), wie z.B. Weichmacher (C), Füllstoffe (D), Verdickungsmittel (E), Lösungsmittel (F), basischen Stickstoff aufweisende Organosiliciumverbindung (G), Katalysator (H), Haftvermittler (I), Wasserfänger (J), Additive (L) und Zuschlagstoffe (M).

Bevorzugt handelt es sich bei Weichmacher (C) um Phthalsäureester, Adipinsäureester, Benzoesäureester, Glycolester, Ester gesättigter Alkandiole, Phosphorsäureester, Sulfonsäureester, Polyester, Polyether, Polystyrole, Polybutadiene, Polyisobutylene, paraffinische Kohlenwasserstoffe und hochmolekulare, verzweigte Kohlenwasserstoffe.

Bevorzugt werden Weichmacher (C) mit Molmassen, bzw. im Falle polymerer Weichmacher mittlerer Molmassen Mₙ, von 200 bis 20 000 g/mol, besonders bevorzugt von 500 bis 10 000 g/mol, insbesondere von 900 bis 8 000 g/mol, eingesetzt.

Weichmacher (C) können dabei sowohl Bestandteil von Komponente (K1) als auch von Komponente (K2) sein. Ebenso können sie auch in beiden Komponenten (K1) und (K2) enthalten sein.

Falls die erfindungsgemäßen Massen (K) Weichmacher (C) enthalten, handelt es sich um Mengen von vorzugsweise 1 bis 200 Gewichtsteilen, besonders bevorzugt 5 bis 100 Gewichtsteilen, jeweils bezogen auf 100 Gewichtsteile Bestandteil (A).

Bei den in den erfindungsgemäßen Massen (K) gegebenenfalls eingesetzten Füllstoffen (D) kann es sich um beliebige, bisher bekannte Füllstoffe handeln.

Beispiele für Füllstoffe (D) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EKPANCFL® bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (D) um Calciumcarbonat, Talkum, Aluminiumtrihydroxid sowie Kieselsäure, wobei Aluminiumtrihydroxid besonders bevorzugt wird. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (D) haben einen Feuchtigkeitsgehalt von bevorzugt unter 1 Gew.-%, besonders bevorzugt von unter 0,5 Gew.-%.

Füllstoffe (D) können dabei sowohl Bestandteil von Komponente (K1) als auch von Komponente (K2) sein. Ebenso können sie auch in beiden Komponenten (K1) und (K2) enthalten sein.

Falls die erfindungsgemäßen Massen (K) Füllstoffe (D) enthalten, handelt es sich um Mengen von vorzugsweise 10 bis 1000 Gewichtsteilen, besonders bevorzugt 50 bis 500 Gewichtsteilen, insbesondere 80 bis 300 Gewichtsteilen, jeweils bezogen auf 100 Gewichtsteile Bestandteil (A). Die erfindungsgemäßen Massen (K) enthalten bevorzugt Füllstoffe (D).

In einer besonderen Ausführung der Erfindung enthalten die erfindungsgemäßen Massen (K) als Füllstoffe (D) eine Kombination aus
a) Kieselsäure, insbesondere pyrogene Kieselsäure, und
b) Calciumcarbonat, Aluminiumtrihydroxid und/oder Talkum.

Falls die erfindungsgemäßen Massen (K) diese besondere Kombination verschiedener Füllstoffe (D) enthalten, enthalten sie vorzugsweise 1 bis 80 Gewichtsteile, besonders bevorzugt 5 bis 40 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, jeweils bezogen auf 100 Gewichtsteile Bestandteil (A).

Bei den in den erfindungsgemäßen Massen (K) gegebenenfalls eingesetzten Verdickungsmitteln (E) handelt es sich vorzugsweise um wasserlösliche oder wasserquellbare Polymere oder um anorganische Verdickungsmittel. Beispiele für organische Verdickungsmittel (E) sind Stärke, Dextrine, Oligosaccharide, Cellulose, Cellulosederivate wie Carboxymethylcellulose, Celluloseether, Methylcellulose, Hydroxyethylcellulose oder Hydroxypropylcellulose, Agar-agar, Alginate, Pektine, Gelatine, Carrageen, Tragant, Gummi arabicum, Casein, Polyacrylamid, Poly(meth)acrylsäurederivate, Polyethylenglycol, Polyvinylether, Polyvinylalkohole, Polyamide oder Polyimine. Beispiele für anorganische Verdickungsmittel (E) sind Polykieselsäuren, pyrogene Kieselsäuren, Alumosilicate oder Tonmineralien.

Falls Verdickungsmittel (E) eingesetzt werden, sind diese vorzugsweise Bestandteile der Komponente (K2).

Falls die erfindungsgemäße Masse (K) Verdickungsmittel (E) in Komponente (K2) enthält, handelt es sich um Mengen von vorzugsweise 0,5 bis 100 Gewichtsteilen, besonders bevorzugt 1 bis 30 Gewichtsteilen, jeweils bezogen auf 100 Gewichtsteile Bestandteil (A) in Komponente (K1).

Beispiele für organische Lösungsmittel (F) sind die bereits oben als Lösungsmittel genannten Verbindungen, bevorzugt Alkohole.

Lösungsmittel (F) können dabei sowohl Bestandteil der Komponente (K1) als auch der Komponente (K2) sein. Ebenso können sie auch in beiden Komponenten (K1) und (K2) enthalten sein.

Den erfindungsgemäßen Massen (K) werden vorzugsweise keine organischen Lösungsmitteln (F) zugesetzt.

Bei den in den erfindungsgemäßen Massen (K) gegebenenfalls eingesetzten Verbindungen (G) handelt es sich vorzugsweise um von den Verbindungen (A) und (B) verschiedene Organosiliciumverbindungen enthaltend Einheiten der Formel

D_{g}Si(OR⁵)_{f}R⁶ₑO_{(4-e-f-g)/2} (VI),

worin
R⁵ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit basischem Stickstoff bedeutet,
R⁶ gleich oder verschieden sein kann und einen einwertigen, gegebenenfalls substituierten SiC-gebundenen, von basischem Stickstoff freien organischen Rest bedeutet,
e 0, 1, 2 oder 3, bevorzugt 1 oder 0, ist,
f 0, 1, 2 oder 3, bevorzugt 1, 2 oder 3, besonders bevorzugt 2 oder 3, ist und
g 0, 1, 2, 3 oder 4, bevorzugt 1, ist,
mit der Maßgabe, dass die Summe aus e+f+g kleiner oder gleich 4 ist und pro Molekül mindestens ein Rest D anwesend ist.

Bei den erfindungsgemäß gegebenenfalls eingesetzten Organosiliciumverbindungen (G) kann es sich sowohl um Silane handeln, d.h. Verbindungen der Formel (VI) mit e+f+g=4, als auch um Siloxane, d.h. Verbindungen enthaltend Einheiten der Formel (VI) mit e+f+g≤3, wobei es sich bevorzugt um Silane handelt.

Beispiele für gegebenenfalls substituierte Kohlenwasserstoffreste R⁵ sind die für Rest R angegebenen Beispiele.

Bei den Resten R⁵ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R⁶ sind die für R angegebenen Beispiele.

Bei Rest R⁶ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH (CH₂)₃-, C₅H₁₁NH (CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH (CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH (CH₂)₃-, (C₅H₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH (CH₂)-, C₇H₁₅NH (CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH (CH₂)-, (C₄H₉)₂NH (CH₂)-, (C₅H₁₁)₂NH(CH₂)-, (C₆H₁₃)₂NH(CH₂)-, (C₇H₁₅)₂NH(CH₂)-, (CH₃O)₃Si (CH₂)₃NH (CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N (CH₂)₂NH (CH₂)₃- und cyclo-C₆H₁₁NH(CH₂)₃-Rest.

Beispiele für die erfindungsgemäß gegebenenfalls eingesetzten Silane der Formel (VI) sind H₂N (CH₂)₃-Si (OCH₃)₃, H₂N (CH₂)₃-Si (OC₂H₅)₃, H₂N (CH₂)₃-Si (OCH₃)₂CH₃, H₂N (CH₂)₃-Si (OC₂H₅)₂CH₃, H₂N (CH₂)₂NH (CH₂)₃-Si (OCH₃)₃, H₂N (CH₂)₂NH (CH₂)₃-Si (OC₂H₅)₃, H₂N (CH₂)₂NH (CH₂)₃-Si (OCH₃) ₂CH₃, H₂N (CH₂)₂NH (CH₂)₃-Si (OC₂H₅) ₂CH₃, H₂N (CH₂)₂NH (CH₂)₃-Si (OH)₃, H₂N (CH₂)₂NH (CH₂)₃-Si (OH) ₂CH₃, H₂N (CH₂) ₂NH (CH₂)₂NH (CH₂) ₃-Si (OCH₃)₃, H₂N(CH₂)₂NH(CH₂)₂NH(CH₂)₃-Si(OC₂H₅)₃, cyclo-C₆H₁₁NH(CH₃)₃-Si(OCH₃)₃, cyclo-C₆H₁₁NH (CH₂)₃-Si (OC₂H₅) ₃, cyclo-C₆H₁₁NH (CH₂) ₃-Si (OCH₃)₂CH₃, cyclo-C₆H₁₁NH (CH₂)₃-Si (OC₂H₅) ₂CH₃, cyclo-C₆H₁₁NH (CH₂)₃-Si (OH)₃, cyclo-C₆H₁₁NH (CH₂)₃-Si (OH) ₂CH₃, Phenyl-NH (CH₂)₃-Si (OCH₃)₃, Phenyl-NH (CH₂) ₃-Si (OC₂H₅) ₃, Phenyl-NH (CH₂) ₃-Si (OCH₃)₂CH₃, Phenyl-NH(CH₂)₃-Si(OC₂H₅)₂CH₃, Phenyl-NH(CH₃)₃-Si(OH)₃, Phenyl-NH (CH₂)₃-Si (OH) ₂CH₃, HN ((CH₂)₃-Si (OCH₃)₃)₂, HN (CH₂)₃-Si(OC₂H₅)₃)₂ HN ((CH₂)₃-Si(OCH₃)₂CH₃)₂, HN ((CH₂)₃-Si (OC₂H₅) ₂CH₃)₂, cyclo-C₆H₁₁NH (CH₂)-Si (OCH₃)₃, cyclo-C₆H₁₁NH (CH₂) -Si (OC₂H₅)₃, cyclo-C₆H₁₁NH (CH₂)-Si (OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH (CH₂)-Si (OH) ₂CH₃, Phenyl-NH (CH₂)-Si (OCH₃)₃, Phenyl-NH(CH₂)-Si(OC₂H₅)₃, Phenyl-NH (CH₂)-Si(OCH₃)₂CH₃, Phenyl-NH (CH₂)-Si(OC₂H₅) ₂CH₃, Phenyl-NH (CH₂)-Si (OH)₃ und Phenyl-NH(CH₂)-Si(OH)₂CH₃ sowie deren Teilhydrolysate, wobei H₂N (CH₂)₂NH (CH₂)₃-Si (OCH₃)₃, H₂N (CH₂)₂NH (CH₂)₃-Si (OC₂H₅) ₃, H₂N (CH₂)₂NH (CH₂) ₃-Si (OCH₃)₂CH₃, cyclo-C₆H₁₁NH(CH₂)₃-Si(OCH₃)₃, cyclo-C₆H₁₁NH (CH₂)₃-Si (OC₂H₅) ₃ und cyclo-C₆H₁₁NH (CH₂)₃-Si (OCH₃)₂CH₃ sowie jeweils deren Teilhydrolysate bevorzugt und H₂N (CH₂)₂NH (CH₂)₃-Si (OCH₃)₃, H₂N (CH₂)₂NH (CH₂) ₃-Si (OCH₃) ₂CH₃, cyclo-C₆H₁₁NH (CH₂)₃-Si (OCH₃)₃, cyclo-C₆H₁₁NH(CH₂)₃-Si (OCH₃)₂CH₃ sowie jeweils deren Teilhydrolysate besonders bevorzugt sind.

Die erfindungsgemäß gegebenenfalls eingesetzten Organosiliciumverbindungen (G) können in den erfindungsgemäßen Massen auch die Funktion eines Härtungskatalysators oder -cokatalysators übernehmen.

Des Weiteren können die erfindungsgemäß gegebenenfalls eingesetzten Organosiliciumverbindungen (G) als Haftvermittler und/oder als Wasserfänger wirken.

Die erfindungsgemäß gegebenenfalls eingesetzten Organosiliciumverbindungen (G) sind handelsübliche Produkte bzw. nach in der Chemie gängigen Verfahren herstellbar.

Falls basischen Stickstoff aufweisende Organosiliciumverbindungen (G) eingesetzt werden, sind diese vorzugsweise Bestandteile der Komponente (K1).

Falls Komponente (K1) Verbindungen (G) enthält, handelt es sich um Mengen von bevorzugt 0,1 bis 25 Gewichtsteilen, besonders bevorzugt 0,5 bis 10 Gewichtsteilen, jeweils bezogen auf 100 Gewichtsteile Verbindungen (A). Die erfindungsgemäße Komponente (K1) enthält bevorzugt Verbindungen (G).

Bei den in den erfindungsgemäßen Massen gegebenenfalls eingesetzten Katalysatoren (H) kann es sich um beliebige, bisher bekannte Katalysatoren für durch Silankondensation härtende Massen handeln.

Beispiele für metallhaltige Härtungskatalysatoren (H) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (H) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin, Guanidinderivate wie Mono-, Di-, Tri-Tetra- oder Pentamethylguanidin.

Ebenfalls als Katalysator (H) können saure Verbindungen eingesetzt werden, wie Phosphorsäure und ihre Ester, Toluolsulfonsäure, Schwefelsäure, Salpetersäure oder auch organische Carbonsäuren, z.B. Essigsäure und Benzoesäure.

Katalysatoren (H) können dabei sowohl Bestandteil der Komponente (K1) als auch der Komponente (K2) sein. Ebenso können sie auch in beiden Komponenten (K1) und (K2) enthalten sein, vorzugsweise werden sie aber nur einer der Komponenten, (K1) oder (K2), zugesetzt.

Falls die erfindungsgemäßen Massen (K) Katalysatoren (H) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Verbindungen (A).

In einer Ausführung der Erfindung handelt es sich bei den gegebenenfalls eingesetzten Katalysatoren (H) um metallhaltige Härtungskatalysatoren, bevorzugt um zinnhaltige Katalysatoren.

Diese Ausführungsform der Erfindung ist insbesondere dann bevorzugt, wenn die Verbindungen (A) ganz oder zumindest teilweise, d.h. zu mindestens 90 Gew.-%, vorzugsweise zu mindestens 95 Gew.-%, aus Verbindungen der Formel (I) bestehen, in denen b ungleich 1 ist.

Bei den erfindungsgemäßen Massen kann vorzugsweise dann auf metallhaltige Katalysatoren (H), und insbesondere auf Zinn enthaltende Katalysatoren, verzichtet werden, wenn die Verbindungen (A) ganz oder zumindest teilweise, d.h. zu mindestens 10 Gew.-%, vorzugsweise zu mindestens 20 Gew.-%, aus Verbindungen der Formel (I) bestehen, in denen b gleich 1 ist und R¹ die Bedeutung von Wasserstoffatom hat. Diese Ausführungsform der Erfindung ohne metall- und insbesondere ohne zinnhaltige Katalysatoren wird besonders bevorzugt.

Bei den in den erfindungsgemäßen Massen (K) gegebenenfalls eingesetzten Haftvermittlern (I) kann es sich um beliebige, bisher für durch Silankondensation härtende Systeme beschriebene und von den Verbindungen (G) unterschiedliche Haftvermittler handeln.

Beispiele für Haftvermittler (I) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyltrimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls Haftvermittler (I) eingesetzt werden, sind diese vorzugsweise Bestandteile der Komponente (K1).

Falls Komponente (K1) Haftvermittler (I) enthält, handelt es sich um Mengen von vorzugsweise 0,5 bis 30 Gewichtsteilen, besonders bevorzugt 1 bis 10 Gewichtsteilen, jeweils bezogen auf 100 Gewichtsteile Verbindungen (A).

Bei den in den erfindungsgemäßen Massen (K) gegebenenfalls eingesetzten Wasserfängern (J) kann es sich um beliebige, für durch Silankondensation härtenden Systemen beschriebene und von den Verbindungen (G) und (I) unterschiedliche Wasserfänger handeln.

Beispiele für Wasserfänger (J) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan.

Falls Wasserfänger (J) eingesetzt werden, sind diese vorzugsweise Bestandteile der Komponente (K1).

Falls Komponente (K1) Wasserfänger (J) enthält, handelt es sich um Mengen von vorzugsweise 0,5 bis 30 Gewichtsteilen, besonders bevorzugt 1 bis 10 Gewichtsteilen, jeweils bezogen auf 100 Gewichtsteile Verbindungen (A). Komponente (K1) enthält bevorzugt Wasserfänger (J).

Bei den in den erfindungsgemäßen Massen gegebenenfalls eingesetzten Additiven (L) kann es sich um beliebige, bisher bekannte für silanvernetzende Systeme typische Additive handeln.

Bei den erfindungsgemäß gegebenenfalls eingesetzten Additiven (L) handelt es sich bevorzugt um Antioxidantien, UV-Stabilisatoren, wie z.B. sog. HALS-Verbindungen, Fungizide und Pigmente. Die Komponenten (K2) können zudem auch noch Emulgatoren, die die Verträglichkeit bzw. Emulgierbarkeit von Wasser und den übrigen Bestandteilen dieser Komponente verbessern, als Additive enthalten. Dabei kann es sich sowohl um ionische als auch um nichtionische Emulgatoren handeln.

Additive (L) können dabei sowohl Bestandteil von Komponente (K1) als auch in Komponente (K2) sein. Ebenso können sie auch in beiden Komponenten, (K1) und (K2), enthalten sein.

Falls die erfindungsgemäßen Massen (K) Additive (L) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A). Die erfindungsgemäßen Massen (K) enthalten bevorzugt Additive (L).

Bei den erfindungsgemäß gegebenenfalls eingesetzten Zuschlagsstoffen (M) handelt es sich bevorzugt um Tetraalkoxysilane, z.B. Tetraethoxysilan und/oder deren Teilkondensate, Reaktivweichmacher, Rheologieadditive und Flammschutzmittel.

Bevorzugte Reaktivweichmacher (M) sind Verbindungen, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (M) handelt es sich bevorzugt um Polyamidwachse, hydrierte Rizinusöle oder Stearate.

Als Flammschutzmittel (M) können alle typischen Flammschutzmittel eingesetzt werden, wie sie für Kleb- und Dichtstoffsysteme typisch sind, insbesondere halogenierte Verbindungen und Derivate, insbesondere Ester, der Phosphorsäure.

Zuschlagsstoffe (M) können dabei sowohl Bestandteil der Komponente (K1) als auch in Komponente (K2) sein. Ebenso können sie auch in beiden Komponenten, (K1) und (K2), enthalten sein.

Falls die erfindungsgemäßen Massen (K) eine oder mehrere Komponenten (M) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Komponente (K2) der erfindungsgemäßen Massen (K) enthält Wasser in Mengen von vorzugsweise 0,1 bis 20 Gewichtsteilen, besonders bevorzugt 0,2 bis 10 Gewichtsteilen, insbesondere 0,3 bis 5 Gewichtsteilen, jeweils bezogen auf 100 Gewichtsteile der in Komponente (K1) eingesetzten Verbindungen (A).

Komponente (K2) der erfindungsgemäßen Massen (K) enthält vorzugsweise 2 bis 400 Gewichtsteile, besonders bevorzugt 5 bis 200 Gewichtsteile, insbesondere mindestens 10 bis 100 Gewichtsteile, mindestens eines weiteren Stoffes ausgewählt aus Siliconharzen (B), Weichmachern (C), Füllstoffen (D) Verdickungsmitteln (E) und Lösungsmitteln (F), jeweils bezogen auf 100 Gewichtsteile der in der ersten Komponente (K1) eingesetzten Verbindungen (A).

Bei den erfindungsgemäßen Massen (K) handelt es sich bevorzugt um solche bestehend aus Komponente (K1) enthaltend
(A) 100 Gewichtsteile Verbindungen der Formel (I),
   gegebenenfalls
(B) Siliconharze enthaltend Einheiten der Formel (II),
   gegebenenfalls
(C) Weichmacher,
   gegebenenfalls
(D) Füllstoffe,
   gegebenenfalls
(F) Lösungsmittel
   gegebenenfalls
(G) basischen Stickstoff aufweisende Verbindung,
   gegebenenfalls
(H) Katalysatoren,
   gegebenenfalls
(I) Haftvermittler,
   gegebenenfalls
(J) Wasserfänger, gegebenenfalls
(L) Additive und
   gegebenenfalls
(M) Zuschlagstoffe
   sowie Komponente (K2) enthaltend, jeweils bezogen auf 100 Gewichtsteile Verbindungen (A), mindestens 0,05 Gewichtsteile Wasser sowie mindestens 1 Gewichtsteil mindestens eines Stoffes ausgewählt aus
(B) Siliconharzen enthaltend Einheiten der Formel (II),
(C) Weichmachern,
(D) Füllstoffen,
(E) Verdickungsmitteln und
(F) Lösungsmitteln,
   sowie gegebenenfalls
(H) Katalysatoren,
   gegebenenfalls
(L) Additiven und
   gegebenenfalls
(M) Zuschlagstoffen,
   mit der Maßgabe, dass die erfindungsgemäße Massen (K) insgesamt mindestens 10 Gewichtsteile Siliconharze (B) enthalten.

Bei den erfindungsgemäßen Massen (K) handelt es sich besonders bevorzugt um solche bestehend aus Komponente (K1) enthaltend
(A) 100 Gewichtsteile Verbindungen der Formel (I),
   gegebenenfalls
(B) Siliconharze enthaltend Einheiten der Formel (II),
   gegebenenfalls
(C) Weichmacher,
   gegebenenfalls
(D) Füllstoffe,
   gegebenenfalls
(F) Lösungsmittel
(G) 0,1 bis 25 Gewichtsteile basischen Stickstoff aufweisende Verbindung,
   gegebenenfalls
(H) Katalysatoren,
   gegebenenfalls
(I) Haftvermittler,
   gegebenenfalls
(J) Wasserfänger,
   gegebenenfalls
(L) Additive und
   gegebenenfalls
(M) Zuschlagstoffe
   sowie Komponente (K2) enthaltend, jeweils bezogen auf 100 Gewichtsteile Verbindungen (A),
   0,1 bis 20 Gewichtsteile, besonders bevorzugt 0,2 bis 10 Gewichtsteile, Wasser sowie 2 bis 400 Gewichtsteile, besonders bevorzugt 5 bis 200 Gewichtsteile, mindestens eines Stoffes ausgewählt aus
(B) Siliconharzen enthaltend Einheiten der Formel (II),
(C) Weichmachern,
(D) Füllstoffen,
(E) Verdickungsmitteln und
(F) Lösungsmitteln,
   sowie gegebenenfalls
(H) Katalysatoren,
   gegebenenfalls
(L) Additiven und
   gegebenenfalls
(M) Zuschlagstoffen,
   mit der Maßgabe, dass die erfindungsgemäßen Massen (K) insgesamt 30 bis 1000 Gewichtsteile Siliconharze (B) enthalten.

Die erfindungsgemäßen Massen (K) enthalten außer den Verbindungen (A), (B), (C), (D), (E), (F), (G), (H), (I), (J), (L), (M) und Wasser vorzugsweise keine weiteren Bestandteile.

Bei den erfindungsgemäß eingesetzten Bestandteilen kann es sich jeweils um eine Art eines solchen Bestandteils wie auch um ein Gemisch aus mindestens zwei Arten eines jeweiligen Bestandteils handeln.

Die erfindungsgemäß eingesetzte Komponente (K1) weist Viskositäten von bevorzugt 500 bis 1 000 000 mPas, besonders bevorzugt von 1 000 bis 500 000 mPas, insbesondere 1 000 bis 20 000 mPas, jeweils bei 25 °C, auf.

Die erfindungsgemäß eingesetzte Komponente (K2) weist Viskositäten von bevorzugt 500 bis 1 000 000 mPas, besonders bevorzugt von 1 000 bis 500 000 mPas, insbesondere 1 000 bis 20 000 mPas, jeweils bei 25 °C, auf.

Das Mengenverhältnis der Komponenten (K1) und (K2) kann prinzipiell beliebig gewählt werden, solange die oben geforderten Mengenverhältnisse zwischen Verbindung (A) in Komponente (K1) und Wasser bzw. weiteren Stoffen in Komponente (K2) sowie die geforderte Gesamtharzmenge erreicht werden. Bevorzugt liegen die Mengenverhältnisse von (K1) zu (K2) zwischen 20:1 und 1:5, besonders bevorzugt zwischen 12:1 und 1:2.

Die Herstellung der erfindungsgemäßen Komponenten (K1) und (K2) kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Massen (K) durch Zusammenmischen der Komponenten (K1) und (K2) sowie gegebenenfalls weiterer Komponenten, wobei die einzelnen Komponenten durch separates Zusammenmischen aller Bestandteile der jeweiligen Komponenten in beliebiger Reihenfolge hergestellt worden sind.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130 °C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen der Komponente (K1) erfolgt bevorzugt unter Ausschluss von Feuchtigkeit.

Das erfindungsgemäße Verfahren kann kontinuierlich oder diskontinuierlich durchgeführt werden.

Bei den einzelnen Komponenten der erfindungsgemäßen Masse handelt es sich um lagerstabile Vormischungen, die dann kurz vor oder aber während der Verarbeitung, insbesondere an Ort und Stelle, vermischt werden können.

Die Vernetzung der erfindungsgemäßen Massen (K) erfolgt bei bzw. nach Inkontaktbringen der Komponenten (K1) und (K2) vorzugsweise bei Raumtemperatur, wobei das mechanische Vermischen bevorzugt ist. Sie kann, falls erwünscht, auch bei höheren oder niedrigeren Temperaturen als Raumtemperatur, z.B. bei -5° bis 15 °C oder bei 30° bis 50 °C erfolgen.

Vorzugsweise wird die Vernetzung bei einem Druck von 100 bis 1100 hPa, insbesondere beim Druck der umgebenden Atmosphäre, durchgeführt.

Ein weiterer Gegenstand der Erfindung sind Formkörper hergestellt durch Vernetzung der erfindungsgemäßen Massen (K).

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Die erfindungsgemäßen Massen (K) sind nach dem Aushärten sehr zugscherfest mit Zugscherfestigkeiten gemessen nach DIN EN 204 nach 7-tägiger Lagerung bei Normklima, also bei 1000 hPa und 23 °C, von bevorzugt mindestens 6 MPa, besonders bevorzugt mindestens 7 MPa, insbesondere mindestens 9 MPa.

Die erfindungsgemäßen Massen (K) werden vorzugsweise als Klebstoffe eingesetzt. Sie können zum Verkleben jedweder Materialien, wie z.B. Holz, Beton, porösen Steinen, Papier, Stoffen, Leder etc., eingesetzt werden. Im Gegensatz zu einkomponentigen, nur durch Kontakt mit Luftfeuchtigkeit aushärtenden Massen sind sie auch zum Verkleben von wasserundurchlässigen Materialien, wie z.B. Metallen, Glas, wasserundurchlässigen Keramiken, nicht porösen Steinen, Kunststoffen, lackierten Oberflächen etc., geeignet. Dies gilt auch dann, wenn sehr tiefe Klebenähte oder sehr dicke Klebstoffschichten eine Härtung über die Luftfeuchtigkeit unmöglich machen oder zumindest massiv verlangsamen würden. Dabei können sowohl gleiche als auch unterschiedliche Materialen miteinander verklebt werden.

Ein weiterer Gegenstand der Erfindung sind Verfahren zur Verklebung oder Abdichtung von Substraten, bei denen die erfindungsgemäß eingesetzten Komponenten (K1) und (K2) sowie gegebenenfalls weitere Komponenten zunächst miteinander vermischt und anschließend auf die Oberfläche mindestens eines Substrates aufgebracht werden, diese Oberfläche dann mit dem zu verklebenden zweiten Substrat in Kontakt gebracht wird, und die erfindungsgemäße Masse (K) anschließend vernetzen gelassen wird.

Ein weiterer Gegenstand der Erfindung sind Verfahren zur Herstellung von Beschichtungen oder Vergüssen, bei denen die erfindungsgemäß eingesetzten Komponenten (K1) und (K2) sowie gegebenenfalls weitere Komponenten zunächst miteinander vermischt und anschließend auf mindestens ein Substrat aufgebracht werden und die erfindungsgemäße Masse (K) anschließend vernetzen gelassen wird.

Beispiele hierfür sind Vergussmassen für LEDs oder sonstige elektronische Bauteile, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen und mindestens einem Substrat so zusammengesetzt ist, dass zwischen den beiden Teilen eine feste, dauerhafte Verbindung besteht.

Die erfindungsgemäßen Massen haben den Vorteil, dass sie leicht herzustellen sind.

Die erfindungsgemäßen vernetzbaren Massen haben den Vorteil, dass sie sich durch eine sehr hohe Lagerstabilität auszeichnen.

Die erfindungsgemäßen vernetzbaren Massen haben den Vorteil, dass sie nach der Vermischung der Komponenten (K1) und (K2) sowie gegebenenfalls weiterer Komponenten eine hohe Vernetzungsgeschwindigkeit aufweisen und auch in großen Schichtdicken und/oder tiefen Klebefugen zwischen zwei wasser- und luftfeuchtigkeitsundurchlässigen Substraten vollständig durchhärten.

Ferner haben die erfindungsgemäßen vernetzbaren Massen den Vorteil, dass sie ein ausgezeichnetes Haftungsprofil aufweisen.

Des Weiteren haben die erfindungsgemäßen vernetzbaren Massen den Vorteil, dass daraus Klebstoffe mit hoher Zugscherfestigkeit erhalten werden können.

Ein weiterer Vorteil der erfindungsgemäßen Massen liegt in der Option, durch Wahl einer niederviskosen Komponente (B) Massen mit einer niedrigen Viskosität, d.h. einer sehr guten Verarbeitbarkeit, zu erhalten, ohne dass man zu diesem Zweck große Mengen oftmals unerwünschter Lösungsmittel und/oder Weichmacher zusetzen muss.

In den nachstehend beschriebenen Beispielen beziehen sich alle Viskositätsangaben auf eine Temperatur von 25 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiele

### Herstellungsbeispiel 1A

### Herstellung einer K1-Komponente für eine 2K Klebstoffformulierung (K1-A)

210,0 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25 °C mit 58,5 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München) und 1,5 g Stabilisator (käuflich erhältlich unter der Bezeichnung TINUVIN^{®} 123 bei der BASF AG, Deutschland; CAS-NR: 129757-67-1) für zwei Minuten bei 200 U/min homogenisiert. Danach werden 29,4 g *N*-(2-Aminoethyl)-3-aminopropyl-methyldimethoxysilan und 0,6 g 1,8-Diazabicyclo[5.4.0]undec-7-en (DBU) für eine Minute bei 200 U/min eingemischt. Schließlich wird für zwei Minuten bei 600 U/min und für eine Minute bei 200 U/min beim Druck von 100 mbar homogenisiert und blasenfrei gerührt.

Die fertige K1-Komponente (K1-A) wird in ein luftdicht verschließbares Gebinde abgefüllt.

### Herstellungsbeispiel 1B

### Herstellung einer K1-Komponente für eine 2K Klebstoffformulierung (K1-B)

Es wird ebenso vorgegangen wie bei Herstellungsbeispiel 1A. Allerdings werden im letzten Einarbeitungsschritt 15,0 g *N-(2-*Aminoethyl)-3-aminopropyl-methyldimethoxysilan und 15,0 g eines hydroxylgruppen-terminierten, flüssigen Poly-[N-(2-Aminoethyl)-3-aminopropyl]-methylsiloxans mit einer Viskosität von 2000-6000 mPas bei 25 °C (käuflich erhältlich unter der Bezeichnung GENIOSIL^{®} GF95-Hydrolysat bei der Fa. Wacker Chemie AG, D-München) anstelle der in Beispiel 1A verwendeten Mischung aus 29,4 g N-(2-Aminoethyl)-3-aminopropyl-methyldimethoxysilan und 0,6 g DBU eingesetzt.

Die fertige K1-Komponente (K1-B) wird in ein luftdicht verschließbares Gebinde abgefüllt.

### Herstellungsbeispiel 1C

### Herstellung einer K1-Komponente für eine 2K Klebstoffformulierung (K1-C)

In 135 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25° C 150,0 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Nach Einarbeitung des Aluminiumtrihydroxids werden 15 g *N*-(2-Aminoethyl)-3-aminopropyl-trimethoxysilan für eine Minute bei 200 U/min eingemischt. Schließlich wird für zwei Minuten bei 600 U/min und für eine Minute bei 200 U/min beim Druck von 100 mbar homogenisiert und blasenfrei gerührt.

Die fertige K1-Komponente (K1-C) wird in ein luftdicht verschließbares Gebinde abgefüllt.

### Herstellungsbeispiel 1D

### Herstellung einer K1-Komponente für eine 2K Klebstoffformulierung (K1-D)

51,0 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25 °C mit 99,0 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München), und 1,5 g Stabilisator (käuflich erhältlich unter der Bezeichnung TINUVIN^{®} 123 bei der BASF AG, Deutschland; CAS-NR: 129757-67-1) für zwei Minuten bei 200 U/min homogenisiert. Danach werden 141,0 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Nach Einarbeitung des Aluminiumtrihydroxids werden 7,5 g *N*-(2-Aminoethyl)-3-aminopropyltrimethoxysilan für eine Minute bei 200 U/min eingemischt. Schließlich wird für zwei Minuten bei 600 U/min und für eine Minute bei 200 U/min beim Druck von 100 mbar homogenisiert und blasenfrei gerührt.

Die fertige K1-Komponente (K1-D) wird in ein luftdicht verschließbares Gebinde abgefüllt.

### Herstellungsbeispiel 2A

### Herstellung einer K2-Komponente für eine 2K Klebstoffformulierung (K2-A)

In 270 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München) werden in einem Laborplanetenmischer der Fa. PC-Laborsystem, ausgestattet mit zwei Balkenmischern, bei ca. 25 °C 15,0 g einer hydrophilen pyrogenen Kieselsäure mit einer BET-Oberfläche von ca. 200 m²/g (käuflich erhältlich unter HDK® N20 bei der Wacker Chemie AG, D-München) unter Rühren eine Minute bei 600 U/min aufgeschlossen. Nach Einarbeitung der Kieselsäure werden 15,0 g Wasser für eine Minute bei 200 U/min eingemischt. Schließlich wird für zwei Minuten bei 600 U/min und für eine Minute bei 200 U/min beim Druck von 100 mbar homogenisiert und blasenfrei gerührt.

Die fertige K2-Komponente (K2-A) wird in ein luftdicht verschließbares Gebinde abgefüllt.

### Herstellungsbeispiel 2B

### Herstellung einer K2-Komponente für eine 2K Klebstoffformulierung (K2-B)

Es wird ebenso vorgegangen wie bei Herstellungsbeispiel 2A. Allerdings werden 277,5 g anstelle von 270,0 g Phenylsiliconharz und lediglich 7,5 g anstelle von 15,0 g Wasser eingesetzt.

Die fertige K2-Komponente (K2-B) wird in ein luftdicht verschließbares Gebinde abgefüllt.

### Herstellungsbeispiel 2C

### Herstellung einer K2-Komponente für eine 2K Klebstoffformulierung (K2-C)

Es wird ebenso vorgegangen wie bei Beispiel 2A. Allerdings werden 282 g anstelle von 270,0 g SILRES^{®} IC 368 und lediglich 3,0 g anstelle von 15,0 g Wasser eingesetzt.

Die fertige K2-Komponente (K2-C) wird in ein luftdicht verschließbares Gebinde abgefüllt.

### Herstellungsbeispiel 2D

### Herstellung einer K2-Komponente für eine 2K Klebstoffformulierung (K2-D)

In 165 g eines einfach verzweigten Polypropylenoxid-Triols mit einer mittleren Molmasse (Mₙ) von 6000 Dalton (käuflich erhältlich unter der Bezeichung Acclaim^{®} 6300 der Fa. Bayer Material Science, D-Leverkusen) werden in einem Laborplanetenmischer der Fa. PC-Laborsystem, ausgestattet mit zwei Balkenmischern, bei ca. 25°C 105 g Kreide mit einer BET-Oberfläche von 15 m²/g und einem d50-Wert von 0,45 µm (käuflich erhältlich unter der Bezeichnung "Socal U1S2" bei der Fa. Solvay) unter Rühren eine Minute bei 600 U/min aufgeschlossen. Danach werden 30,0 g Wasser für eine Minute bei 200 U/min eingemischt. Schließlich wird für zwei Minuten bei 600 U/min und für eine Minute bei 200 U/min beim Druck von 100 mbar homogenisiert und blasenfrei gerührt.

Die fertige K2-Komponente (K2-D) wird in ein luftdicht verschließbares Gebinde abgefüllt.

### Beispiel 1

Jeweils 30 g der fertigen K1-Komponenten K1-A, K1-B und K1-C aus den Herstellungsbeispielen 1A bis 1C werden mit jeweils 30 g der fertigen K2-Komponenten K2-A, K2-B und K2-C aus den Herstellungsbeispielen 2A bis 2C zu den in Tabelle 1 aufgeführten neun zweikomponentig härtenden Klebstoffsystemen zusammengestellt. Die Vermischung der Komponenten und das Ausbringen der fertigen zweikomponentigen Mischung erfolgt mittels eines Mix-pac™ B-Systems der Fa. Sulzer Mixpac AG, Ruetistrasse 7, CH-9469 Haag. Die zu vermischenden Komponenten werden dabei in je eine Teilkartusche einer 2-Komponenten Kartusche mit je 50 ml Volumen pro Teilkartusche abgefüllt und beim Auspressen aus der 2-Komponenten Kartusche mittels des zu dem Mixpac™ B-System gehörenden Statikmischers (Bestellnummer 0608 4454-14) homogen vermischt. Anschließend werden die Eigenschaften der neun erhaltenen zweikomponentig vernetzenden Massen bestimmt.

### Hautbildungszeit (HBZ)

Zur Bestimmung der Hautbildungszeit werden die neun erhaltenen zweikomponentig vernetzenden Massen jeweils in einer 2 mm dicken Schicht auf PE-Folie aufgetragen und bei Normklima (23 °C und 50 % relative Luftfeuchtigkeit) gelagert. Während des Aushärtens wird einmal pro Minute die Bildung einer Haut getestet. Dazu wird ein trockener Laborspatel vorsichtig auf die Oberfläche der Probe aufgesetzt und nach oben gezogen. Bleibt Probe am Spatel kleben, hat sich noch keine Haut gebildet. Bleibt keine Probe am Spatel mehr kleben, so hat sich eine Haut gebildet und die Zeit wird notiert. Die Ergebnisse finden sich in Tabelle 1.

**Tabelle 1:**

| Beispiel | Komponente K1 | Komponente K2 | Mischungsverhältnis | Hautbildungszeit [min] |
|---|---|---|---|---|
| 1.1 | K1-A | K2-A | 1:1 | 15 |
| 1.2 | K1-A | K2-B | 1:1 | 18 |
| 1.3 | Kl-A | K2-C | 1:1 | 20 |
| 1.4 | K1-B | K2-A | 1:1 | 37 |
| 1.5 | K1-B | K2-B | 1:1 | 60 |
| 1.6 | K1-B | K2-C | 1:1 | 65 |
| 1.7 | K1-C | K2-A | 1:1 | 5 |
| 1.8 | K1-C | K2-B | 1:1 | 9 |
| 1.9 | K1-C | K2-C | 1:1 | 15 |

### Zugscherfestigkeit

Die Bestimmung der Zugscherfestigkeiten der neun erhaltenen zweikomponentig vernetzenden Massen erfolgt dabei in Anlehnung an die DIN EN 204, wobei jedoch Aluminiumplättchen verklebt werden. Hierbei erfolgt ein Auftrag des Klebstoffes auf die zwei zu verklebenden Aluminiumplättchen, welche dann mit einem 100 µm Rakel abgezogen werden. Anschließend erfolgt das Verbinden der beiden Plättchen über eine Fläche von 1 mal 2 cm mit einem Anpressdruck von 5 kg für eine Minute. Nach dem Anpressen werden die Plättchen im Normklima für 150 h gelagert. Anschließend wird die Zugscherfestigkeit der beiden verklebten Aluminiumplättchen gemessen.

Dabei weisen alle neun erhaltenen zweikomponentig vernetzenden Massen nahezu identische Zugscherfestigkeiten auf, die in einem Bereich zwischen 8,5 und 9,5 MPa liegen.

### Bestimmung des Zugscherfestigkeitsaufbaus:

Bei den oben beschriebenen 1:1 Mischungen aus den Komponenten K1-B und K2-A sowie den Komponenten K1-C und K2-A, wurde der Zugscherfestigkeitsaufbau in Abhängigkeit von der Härtungsdauer bestimmt.

Die Bestimmung der Zugscherfestigkeiten erfolgt dabei in Anlehnung an die DIN EN 204, wobei jedoch Aluminiumplättchen verklebt werden. Hierbei erfolgt ein Auftrag des Klebstoffes auf die zwei zu verklebenden Aluminiumplättchen, welche dann mit einem 100 µm Rakel abgezogen werden. Anschließend erfolgt das Verbinden der beiden Plättchen über eine Fläche von 1 mal 2 cm mit einem Anpressdruck von 5 kg für eine Minute. Nach dem Anpressen werden die Plättchen im Normklima für die in der Tabelle 2 angegebene Dauer gelagert. Anschließend wird die Zugscherfestigkeit der beiden verklebten Aluminiumplättchen gemessen. Die Ergebnisse finden sich in Tabelle 2.

**Tabelle 2:**

| Härtungsdauer [h] | Beispiel 1.4 Zugscherfestigkeit 2K-Mischung (K1-B/K2-A) [MPa] | Beispiel 1.7 Zugscherfestigkeit 2K-Mischung (K1-C/K2-A) [MPa] |
|---|---|---|
| 6 | 1,2 | 2,9 |
| 20 | 3,3 | 5,1 |
| 30 | 4,6 | 6,7 |
| 100 | 9,0 | 8,0 |
| 150 | 9,2 | 8,8 |

### Beispiel 2

### Bestimmung der Eigenschaften von 2K-Klebstoffformulierungen

Jeweils 60 g der fertigen K1-Komponenten K1-B und K1-D aus den Herstellungsbeispielen 1B und 1D werden mit jeweils 6 g der fertigen K2-Komponenten K2-D aus dem Herstellungsbeispiel 2D zusammengewogen und mittels eines Laborspatels homogen vermischt.

Anschließend werden die Eigenschaften der beiden erhaltenen zweikomponentig vernetzenden Massen bestimmt.

### Hautbildungszeit (HBZ)

Die Bestimmung der Hautbildungszeit erfolgt wie in Beispiel 1 beschrieben. Die 10:1-Mischung aus den Komponenten K1-B und K2-D weist dabei eine Hautbildungszeit von 32 min auf, und die 10:1 Mischung aus den Komponenten K1-D und K2-D zeigt eine Hautbildungszeit von 10 min.

### Bestimmung des Zugscherfestigkeitsaufbaus:

Bei den beiden oben beschriebenen 10:1 Mischungen aus den Komponenten K1-B und K2-D bzw. K1-D und K2-D wurde der Zugscherfestigkeitsaufbau in Abhängigkeit von der Härtungsdauer bestimmt.

Die Bestimmung des Zugscherfestigkeitsaufbaus erfolgt dabei wie in Beispiel 1 beschrieben. Die Ergebnisse finden sich in Tabelle 3.

**Tabelle 3:**

| Härtungsdauer [h] | Beispiel 2.1 Zugscherfestigkeit 2K-Mischung (K1-B/K2-D) [MPa] | Beispiel 2.2 Zugscherfestigkeit 2K-Mischung (K1-D/K2-D) [MPa] |
|---|---|---|
| 6 | 2,3 | 2 |
| 20 | 3,1 | 4 |
| 30 | 4,3 | 6,6 |
| 100 | 5 | 7 |
| 150 | 5,2 | 7,2 |

## Patentansprüche

1. Mehrkomponentig vernetzbare Massen (K) enthaltend mindestens eine Komponente (K1) und eine Komponente (K2), **dadurch gekennzeichnet, dass** Komponente (K1)
100 Gewichtsteile Verbindungen (A) der Formel
- [(CR¹₂)_{b}-SiRₐ(OR²)₃₋ₐ]ₓ (I)
enthält, wobei
Y einen x-wertigen, über Stickstoff, Sauerstoff, Schwefel oder Kohlenstoff gebundenen Polymerrest bedeutet,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist, enthält, und
Komponente (K2), jeweils bezogen auf 100 Gewichtsteile Verbindungen (A) in Komponente (K1), mindestens 0,05 Gewichtsteile Wasser sowie mindestens 1 Gewichtsteil mindestens eines weiteren Stoffes, ausgewählt aus
(B) Siliconharzen enthaltend Einheiten der Formel
R³_{c}(R⁴O)_{d}SiO_{(4-c-d)/2} (II),
wobei
R³ gleich oder verschieden sein kann und Wasserstoffatom oder einen einwertigen, SiC-gebundenen, gegebenenfalls substituierten Kohlenwasserstoffrest,
R⁴ gleich oder verschieden sein kann und Wasserstoffatom oder einen einwertigen, gegebenenfalls substituierten Kohlenwasserstoffrest bedeutet,
c 0, 1, 2 oder 3 ist und
d 0, 1, 2 oder 3 ist,
wobei die Summe aus c+d kleiner oder gleich 3 ist und in mindestens 50 % der Einheiten der Formel (II) c gleich 0 oder 1 ist,
(C) Weichmachern,
(D) Füllstoffen,
(E) Verdickungsmitteln und
(F) Lösungsmitteln, enthält,
mit der Maßgabe, dass in den Komponenten (K1) und (K2) insgesamt mindestens 10 Gewichtsteile Siliconharze (B) enthalten sind, bezogen auf 100 Gewichtsteile Verbindungen (A) in Komponente (K1).

2. Vernetzbare Massen gemäß Anspruch 1, **dadurch gekennzeichnet, dass** es sich um zweikomponentige Massen, die aus den Komponenten (K1) und (K2) bestehen, handelt.

3. Vernetzbare Massen gemäß Anspruch 1 oder 2, **dadurch gekennzeichnet, dass** sie Siliconharze (B) in Mengen von 30 bis 1000 Gewichtsteilen, bezogen auf 100 Gewichtsteile der Verbindungen (A) in der Komponente (K1), enthalten.

4. Vernetzbare Massen gemäß einem oder mehreren der Ansprüche 1 bis 3, **dadurch gekennzeichnet, dass** es sich bei den Siliconharzen (B) um Phenylsiliconharze handelt.

5. Vernetzbare Massen gemäß einem oder mehreren der Ansprüche 1 bis 4, **dadurch gekennzeichnet, dass** Organosiliciumverbindungen (G) enthaltend Einheiten der Formel
D_{g}Si(OR⁵)_{f}R⁶ₑO_{(4-e-f-g)/2} (VI)
eingesetzt werden, worin
R⁵ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit basischem Stickstoff bedeutet,
R⁶ gleich oder verschieden sein kann und einen einwertigen, gegebenenfalls substituierten SiC-gebundenen, von basischem Stickstoff freien organischen Rest bedeutet,
e 0, 1, 2 oder 3 ist,
f 0, 1, 2 oder 3 ist und
g 0, 1, 2, 3 oder 4 ist,
mit der Maßgabe, dass die Summe aus e+f+g kleiner oder gleich 4 ist und pro Molekül mindestens ein Rest D anwesend ist.

6. Vernetzbare Massen gemäß einem oder mehreren der Ansprüche 1 bis 5, **dadurch gekennzeichnet, dass** es sich um solche handelt bestehend aus Komponente (K1) enthaltend
(A) 100 Gewichtsteile Verbindungen der Formel (I),
gegebenenfalls
(B) Siliconharze enthaltend Einheiten der Formel (II),
gegebenenfalls
(C) Weichmacher,
gegebenenfalls
(D) Füllstoffe,
gegebenenfalls
(F) Lösungsmittel
gegebenenfalls
(G) basischen Stickstoff aufweisende Verbindung,
gegebenenfalls
(H) Katalysatoren,
gegebenenfalls
(I) Haftvermittler,
gegebenenfalls
(J) Wasserfänger,
gegebenenfalls
(L) Additive und
gegebenenfalls
(M) Zuschlagstoffe
sowie Komponente (K2) enthaltend, jeweils bezogen auf 100 Gewichtsteile Verbindungen (A), mindestens 0,05 Gewichtsteile Wasser sowie mindestens 1 Gewichtsteil mindestens eines Stoffes ausgewählt aus
(B) Siliconharzen enthaltend Einheiten der Formel (II),
(C) Weichmachern,
(D) Füllstoffen,
(E) Verdickungsmitteln und
(F) Lösungsmitteln,
sowie gegebenenfalls
(H) Katalysatoren,
gegebenenfalls
(L) Additiven und
gegebenenfalls
(M) Zuschlagstoffen,
mit der Maßgabe, dass die erfindungsgemäße Massen (K) insgesamt mindestens 10 Gewichtsteile Siliconharze (B) enthalten.

7. Verfahren zur Herstellung der Massen gemäß einem oder mehreren der Ansprüche 1 bis 6 durch Zusammenmischen der Komponenten (K1) und (K2) sowie gegebenenfalls weiterer Komponenten, wobei die einzelnen Komponenten durch separates Zusammenmischen aller Bestandteile der jeweiligen Komponenten in beliebiger Reihenfolge hergestellt worden sind.

8. Formkörper hergestellt durch Vernetzung der Massen gemäß einem oder mehreren der Ansprüche 1 bis 6 oder hergestellt gemäß Anspruch 7.

9. Verfahren zur Verklebung oder Abdichtung von Substraten, bei denen die erfindungsgemäß eingesetzten Komponenten (K1) und (K2) sowie gegebenenfalls weitere Komponenten zunächst miteinander vermischt und anschließend auf die Oberfläche mindestens eines Substrates aufgebracht werden, diese Oberfläche dann mit dem zu verklebenden zweiten Substrat in Kontakt gebracht wird, und die Masse gemäß einem oder mehreren der Ansprüche 1 bis 6 oder hergestellt gemäß Anspruch 7 anschließend vernetzen gelassen wird.

10. Verfahren zur Herstellung von Beschichtungen oder Vergüssen, bei denen die erfindungsgemäß eingesetzten Komponenten (K1) und (K2) sowie gegebenenfalls weitere Komponenten zunächst miteinander vermischt und anschließend auf mindestens ein Substrat aufgebracht werden und die Masse gemäß einem oder mehreren der Ansprüche 1 bis 6 oder hergestellt gemäß Anspruch 7 anschließend vernetzen gelassen wird.

## Claims

1. Multicomponently crosslinkable compositions (K) comprising at least a component (K1) and a component (K2), **characterized in that** component (K1) comprises 100 parts by weight of compounds (A) of the formula
Y-[(CR¹₂)_{b}-SiRₐ(OR²)₃₋ₐ]ₓ (I),
where
Y denotes an x-valent polymer radical bonded via nitrogen, oxygen, sulfur, or carbon,
R may be identical or different and is a monovalent, optionally substituted, SiC-bonded hydrocarbon radical,
R¹ may be identical or different and is hydrogen atom or a monovalent, optionally substituted hydrocarbon radical, which may be attached to the carbon atom via nitrogen, phosphorus, oxygen, sulfur, or carbonyl group,
R² may be identical or different and is hydrogen atom or a monovalent, optionally substituted hydrocarbon radical,
x is an integer from 1 to 10,
a may be identical or different and is 0, 1, or 2, and
b may be identical or different and is an integer from 1 to 10, and
component (K2), based in each case on 100 parts by weight of compounds (A) in component (K1), comprises at least 0.05 part by weight of water and also at least 1 part by weight of at least one further substance, selected from
(B) silicone resins comprising units of the formula
R³_{c}(R⁴O)_{d}SiO_{(4-c-d)/2} (II),
where
R³ may be identical or different and denotes hydrogen atom or a monovalent, SiC-bonded, optionally substituted hydrocarbon radical,
R⁴ may be identical or different and denotes hydrogen atom or a monovalent, optionally substituted hydrocarbon radical,
c is 0, 1, 2, or 3, and
d is 0, 1, 2, or 3,
where the sum of c+d is less than or equal to 3 and in at least 50% of the units of the formula (II) c is equal to 0 or 1,
(C) plasticizers,
(D) fillers,
(E) thickeners, and
(F) solvents,
with the proviso that in total there are at least 10 parts by weight of silicone resins (B) in components (K1) and (K2), based on 100 parts by weight of compounds (A) in component (K1).

2. Crosslinkable compositions according to Claim 1, **characterized in that** they are two-component compositions consisting of components (K1) and (K2).

3. Crosslinkable compositions according to Claim 1 or 2, **characterized in that** they comprise silicone resins (B) in amounts of 30 to 1000 parts by weight, based on 100 parts by weight of the compounds (A) in component (K1).

4. Crosslinkable compositions according to one or more of Claims 1 to 3, **characterized in that** the silicon resins (B) are phenylsilicone resins.

5. Crosslinkable compositions according to one or more of Claims 1 to 4, **characterized in that** organosilicon compounds (G) comprising units of the formula
DgSi(OR⁵)_{f}R⁶ₑO_{(4-e-f-g)/2} (VI)
are used in which
R⁵ may be identical or different and denotes hydrogen atom or optionally substituted hydrocarbon radicals,
D may be identical or different and denotes a monovalent, SiC-bonded radical containing basic nitrogen,
R⁶ may be identical or different and denotes a monovalent, optionally substituted, SiC-bonded organic radical free from basic nitrogen,
e is 0, 1, 2, or 3,
f is 0, 1, 2, or 3, and
g is 0, 1, 2, 3, or 4,
with the proviso that the sum of e+f+g is less than or equal to 4 and there is at least one radical D present per molecule.

6. Crosslinkable compositions according to one or more of Claims 1 to 5, **characterized in that** they are compositions consisting of component (K1) comprising
(A) 100 parts by weight of compounds of the formula (I),
optionally
(B) silicone resins comprising units of the formula (II),
optionally
(C) plasticizers,
optionally
(D) fillers,
optionally
(F) solvents,
optionally
(G) compound containing basic nitrogen, optionally
(H) catalysts,
optionally
(I) adhesion promoters,
optionally
(J) water scavengers,
optionally
(L) additives, and
optionally
(M) adjuvants
and also component (K2) comprising, based in each case on 100 parts by weight of compounds (A), at least 0.05 part by weight of water and also at least 1 part by weight of at least one substance selected from
(B) silicone resins comprising units of the formula (II),
(C) plasticizers,
(D) fillers,
(E) thickeners, and
(F) solvents,
and also optionally
(H) catalysts,
optionally
(L) additives, and
optionally
(M) adjuvants,
with the proviso that the composition (K) of the invention contains in total at least 10 parts by weight of silicone resins (B).

7. Method for producing the compositions according to one or more of Claims 1 to 6 by mixing together components (K1) and (K2) and also, optionally, further components, the individual components having been produced by separate mixing together of all constituents of the respective components in any order.

8. Shaped article produced by crosslinking the compositions according to one or more of Claims 1 to 6 or produced according to Claim 7.

9. Method for adhesive bonding or sealing of substrates, which comprises first mixing the inventively employed components (K1) and (K2) and also, optionally, further components with one another and then applying the mixture to the surface of at least one substrate, then contacting said surface with the second substrate to be bonded, and subsequently allowing crosslinking of the composition according to one or more of Claims 1 to 6 or produced according to Claim 7.

10. Method for producing coatings or encapsulations, which comprises first mixing the inventively employed components (K1) and (K2) and also, optionally, further components with one another and then applying the mixture to at least one substrate, and subsequently allowing crosslinking of the composition according to one or more of Claims 1 to 6 or produced according to Claim 7.

## Revendications

1. Masses (K) réticulables, à plusieurs composants, contenant au moins un composant (K1) et un composant (K2), **caractérisées en ce que** le composant (K1) contient 100 parties en poids de composés (A) de formule
Y-[(CR¹₂)_{b}-SiRₐ(OR²)₃₋ₐ]ₓ (I)
dans laquelle
Y signifie un radical polymère x-valent, lié par azote, oxygène, soufre ou carbone,
R peut être identique ou différent et représente un radical hydrocarboné monovalent, le cas échéant substitué, lié par SiC,
R¹ peut être identique ou différent et représente un atome d'hydrogène ou un radical hydrocarboné monovalent, le cas échéant substitué, qui peut être lié à l'atome de carbone par l'intermédiaire d'azote, de phosphore, d'oxygène, de soufre ou d'un groupe carbonyle,
R² peut être identique ou différent et représente un atome d'hydrogène ou un radical hydrocarboné monovalent, le cas échéant substitué,
x vaut un nombre entier de 1 à 10.
a peut être identique ou différent et vaut 0, 1 ou 2 et
b peut être identique ou différent et vaut un nombre entier de 1 à 10 et
le composant (K2) contient, à chaque fois par rapport à 100 parties en poids de composés (A) dans le composant (K1), au moins 0,05 partie en poids d'eau ainsi qu'au moins 1 partie en poids d'au moins une autre substance, choisie parmi
(B) les résines de silicone, contenant des unités de formule
R³_{c}(R⁴O)_{d}SiO_{(4-c-d)/2} (II),
dans laquelle
R³ peut être identique ou différent et signifie un atome d'hydrogène ou un radical hydrocarboné monovalent, lié par SiC, le cas échéant substitué,
R⁴ peut être identique ou différent et signifie un atome d'hydrogène ou un radical hydrocarboné monovalent, le cas échéant substitué,
c vaut 0, 1, 2 ou 3 et
d vaut 0, 1, 2 ou 3,
la somme de c + d étant inférieure ou égale à 3 et, dans au moins 50% des unités de formule (II), c valant 0 ou 1,
(C) des plastifiants,
(D) des charges,
(E) des épaississants et
(F) des solvants,
à condition que les composants (K1) et (K2) contiennent au total au moins 10 parties en poids de résines de silicone (B), par rapport à 100 parties en poids de composés (A) dans le composant (K1).

2. Masses réticulables selon la revendication 1, **caractérisées en ce qu'**il s'agit de masses à deux composants, qui sont constituées par les composants (K1) et (K2).

3. Masses réticulables selon la revendication 1 ou 2, **caractérisées en ce qu'**elles contiennent des résines de silicone (B) en des quantités de 30 à 1000 parties en poids, par rapport à 100 parties en poids des composés (A) dans le composant (K1).

4. Masses réticulables selon l'une ou plusieurs des revendications 1 à 3, **caractérisées en ce qu'**il s'agit, pour les résines de silicone (B), de résines de phénylsilicone.

5. Masses réticulables selon l'une ou plusieurs des revendications 1 à 4, **caractérisées en ce qu'**on utilise des composés organosiliciés (G) contenant des unités de formule
D_{g}Si(OR⁵)_{f}R⁶ₑO_{(4-e-f-g)/2} (VI)
dans laquelle
R⁵ peut être identique ou différent et signifie un atome d'hydrogène ou des radicaux hydrocarbonés le cas échéant substitués,
D peut être identique ou différent et signifie un radical monovalent lié par SiC, contenant de l'azote basique,
R⁶ peut être identique ou différent et signifie un radical organique monovalent, le cas échéant substitué, lié par SiC, exempt d'azote basique,
e vaut 0, 1, 2 ou 3,
f vaut 0, 1, 2 ou 3 et
g vaut 0, 1, 2, 3 ou 4,
à condition que la somme de e + f + g soit inférieure ou égale à 4 et qu'il existe au moins un radical D par molécule.

6. Masses réticulables selon l'une ou plusieurs des revendications 1 à 5, **caractérisées en ce qu'**il s'agit de masses constituées par le composant (K1) contenant
(A) 100 parties en poids de composés de formule (I), le cas échéant
(B) des résines de silicone, contenant des unités de formule (II), le cas échéant
(C) des plastifiants, le cas échéant
(D) des charges, le cas échéant
(F) de solvants, le cas échéant
(G) un composé présentant de l'azote basique, le cas échéant
(H) des catalyseurs, le cas échéant
(I) des promoteurs d'adhérence, le cas échéant
(J) des pièges d'eau, le cas échéant
(L) des additifs et le cas échéant
(M) des produits adjuvants
ainsi que par le composant (K2) contenant, à chaque fois par rapport à 100 parties en poids de composés (A), au moins 0,05 partie en poids d'eau ainsi qu'au moins 1 partie en poids d'au moins une autre substance, choisie parmi
(B) des résines de silicone, contenant des unités de formule (II),
(C) des plastifiants,
(D) des charges,
(E) des épaississants et
(F) des solvants,
ainsi que le cas échéant
(H) des catalyseurs, le cas échéant
(L) des additifs et le cas échéant
(M) des produits adjuvants,
à condition que les masses (K) selon l'invention contiennent au total au moins 10 parties en poids de résines de silicone (B).

7. Procédé pour la préparation des masses selon l'une ou plusieurs des revendications 1 à 6 par mélange des composants (K1) et (K2) ainsi que le cas échéant d'autres composants, les différents composants ayant été préparés par mélange séparé de tous les constituants des différents composants dans un ordre quelconque.

8. Corps façonné, préparé par réticulation des masses selon l'une ou plusieurs des revendications 1 à 6 ou préparées selon la revendication 7.

9. Procédé pour le collage ou l'étanchéification de substrats, dans lequel les composants (K1) et (K2) ainsi que le cas échéant d'autres composants utilisés selon l'invention sont d'abord mélangés les uns avec les autres et ensuite appliqués sur la surface d'au moins un substrat, cette surface est ensuite mise en contact avec le deuxième substrat à coller et on laisse ensuite réticuler la masse selon l'une ou plusieurs des revendications 1 ou 6 ou préparée selon la revendication 7.

10. Procédé pour la réalisation de revêtements ou de scellements, dans lequel les composants (K1) et (K2) ainsi que le cas échéant d'autres composants utilisés selon l'invention sont d'abord mélangés les uns avec les autres et ensuite appliqués sur au moins un substrat et on laisse ensuite réticuler la masse selon l'une ou plusieurs des revendications 1 ou 6 ou préparée selon la revendication 7.
